# EUROPÄISCHE PATENTANMELDUNG

(11) **EP 2 251 610 A2**
(43) Veröffentlichungstag der Anmeldung: **17.11.2010**
(21) Anmeldenummer: 10401065.7
(22) Anmeldetag: 03.05.2010
(51) Int. Cl.: F24D 11/00

(54) **Solartechnische Anordnung sowie Verfahren dafür.**

(30) Priorität: 05.05.2009 DE 102009003878
(71) Anmelder: Kloock, Martin, 21220 Seevetal (DE)
(72) Erfinder: Kloock, Martin, 21220 Seevetal (DE)
(74) Vertreter: Hansen, Jochen

(57) **Zusammenfassung**

Die Erfindung betrifft ein Verfahren zur Beheizung und/oder Kühlung von Gebäuden, die massive Bauelemente, insbesondere Betonmassen, wie beispielsweise Fundamente und Decken aufweisen, mittels Solarenergie, mit den Schritten: Erwärmen eines Wärmeträgermediums in einem Solarkollektor; Zirkulieren des Wärmeträgermediums über ein erstes Zirkulationssystem, Erwärmen der massiven Bauelemente durch das erste Zirkulationssystem und Wärmeabgabe von den massiven Bauelementen an Innenräume des Gebäudes.

Ferner betrifft die Erfindung eine solartechnische Anordnung zur Beheizung und/oder Kühlung von Gebäuden, die massive Bauelemente (3) aufweisen, mittels Solarenergie, mit einem Solarkollektor (11), einem ersten Zirkulationssystem (1) für ein Wärmeträgermedium mit einer Pumpe (12) und wenigstens einem am ersten Zirkulationssystem (1) angeschlossenen Wärmeabgabemittel (13), wobei das Wärmeabgabemittel (13) Leitungsschlangen sind und die Leitungsschlangen (13) in den massiven Bauelementen (3) eingelegt sind.

## Beschreibung

Die Erfindung betrifft ein Verfahren zur Beheizung und/oder Kühlung von Gebäuden, die massive Bauelemente, insbesondere Betonmassen, wie beispielsweise Fundamente und Decken aufweisen, mittels Solarenergie sowie eine solartechnische Anordnung dafür mit einem Solarkollektor, einem ersten Zirkulationssystem für ein Wärmeträgermedium mit einer Pumpe und wenigstens einem am ersten Zirkulationssystem angeschlossenen Wärmeabgabemittel.

Solarkollektoren sind im Bereich der Gebäudetechnik zur Warmwasserbereitung sowie zur Wohnraumbeheizung bzw. Heizungsunterstützung bekannt. Dabei wird das im Solarkreislauf zirkulierende Wärmeträgermedium zu einem Wärmetauscher in einem Wasserspeicher geleitet. Dieser Wasserspeicher ist entweder gleich der Warmwasserspeicher oder er ist als sog. Pufferspeicher ausgebildet und dient somit zur Bevorratung der bei Sonneneinstrahlung gewonnenen Wärmeenergie. Da jedoch Wasserspeicher relativ kostenaufwendig sind, einen erheblichen Raumbedarf haben und darüber hinaus eine gute Wärmedämmung aufweisen müssen, entstehen somit für eine herkömmliche solartechnische Anlage erhebliche Kosten. Insbesondere für eine solartechnische Anlage, die auch der Gebäudeheizung dienen soll, dürfte selbst ein Wasserspeichervolumen von 1.000 L kaum für einen sinnvollen Einsatz der Solarthermie ausreichend sein.

Aufgabe der Erfindung ist es, einen geeigneten Wärmespeicher in oder an einem Gebäude zu schaffen, der kostengünstig ist und ein ausreichend großes Speichervolumen aufweist.

Gelöst wird diese Aufgabe mit einem Verfahren gemäß Anspruch 1 und einer solartechnischen Anordnung gemäß Anspruch 4.

Dadurch, dass das erste Zirkulationssystem (Solarkreislauf) direkt für das Erwärmen massiver Bauelemente des Gebäudes verwendet wird, wird eine im zu beheizenden Gebäude ohnehin vorhandene Baumasse zur Wärmespeicherung genutzt. Da die Wärmeabgabe direkt von diesen massiven Bauelementen an die Innenräume des Gebäudes erfolgt, ist ein weiterer Transport der Wärme über Zirkulationssysteme, so wie es bisher bei sog. Zentralheizungen gemacht wurde, nicht erforderlich. Vielmehr wird die in den massiven Bauelementen über das erste Zirkulationssystem (Solarkreislauf) eingespeicherte Wärme langsam mit einer erheblichen Phasenverschiebung an die Innenräume des Gebäudes abgegeben.

Vorrichtungsgemäß wird bei der solartechnischen Anordnung die von dem Solarkollektor aufgefangene Wärmeenergie über das Zirkulationssystem durch Leitungsschlangen, die in den massiven Bauelementen vorgesehen sind, an die massiven Bauelemente abgegeben.

Bedarfsweise kann das Wärmeträgermedium im ersten Zirkulationssystem vom Solarkollektor zunächst zu einem Warmwasserspeicher geführt werden. Damit ist es möglich, neben der im nachfolgenden auch "Betonkernerwärmung" bezeichneten Erwärmung massiver Bauelemente des Gebäudes auch das Brauchwasser in angemessener Weise zu erwärmen. Da in dieser Ausgestaltung das Wärmeträgermedium nach Verlassen des Solarkollektors in den Warmwasserspeicher geführt wird, ist die erreichbare Wassertemperatur im Warmwasserspeicher maximiert.

Bedarfsweise kann das Erwärmen der massiven Bauelemente von einer Verbrennungswärmequelle in einem zweiten Zirkulationssystem unterstützt werden. Dieses System kann eine zusätzliche Erwärmung der massiven Bauelemente an sonnenarmen Wintertagen und damit eine Heizungsunterstützung für die Solarkollektor gestützte Grundheizung erbringen. Ferner kann über das zweite Zirkulationssystem eine Zuheizung für den Warmwasserspeicher gewährleistet werden.

Bevorzugt sind als Wärmespeicher geeignete massive Bauelemente die Fundamentplatte, die Rohdecken des Gebäudes sowie massive Stein- oder Betonwände. Die als Leitungsschlangen ausgebildeten Wärmeabgabemittel sind möglichst gleich beabstandet in diesen Bauelementen eingelegt. Bei Betonbauteilen werden die Leitungsschlangen vor dem Betonieren des Bauteils verlegt und fixiert.

Um eine unerwünschte Wärmeabgabe an die Umgebung zu vermeiden, sind die als Wärmespeicher zu nutzenden massiven Bauelemente besonders wirksam zur äußeren Umgebung wärmegedämmt ausgebildet. Bei einer Fundamentplatte sollte daher auch die Unterseite der Fundamentplatte durch zugelassene und geeignete Wärmedämmplatten thermisch vom Untergrund getrennt werden. Ebenso gilt dies für Teile von massiven Bauelementen, die an die Außenumgebung grenzen. Außenwände benötigen somit geeignete Außendämmung.

Dadurch, dass im ersten Zirkulationssystem zwischen Sonnenkollektor und Leitungsschlange ein Mischventil angeordnet ist, kann eine gleichmäßige Aufwärmung der massiven Bauteile unter optimaler Ausnutzung der auf dem Solarkollektor eingestrahlten Solarthermie erreicht werden.

Wie bereits verfahrensgemäß erwähnt, ist in einer bevorzugten Ausführungsform ein Wasserspeicher am ersten Zirkulationssystem angeschlossen. Erfolgt dieser Anschluss über ein 3-2-Wege-Ventil kann das Aufladen des Wasserspeichers bedarfsweise so lange erfolgen, wie ein Aufladen des Warmwasserspeichers thermodynamisch sinnvoll ist. Alternativ kann mit einem Mischventil ein geeigneter (Teil-)Strom über den Wasserspeicher geleitet werden.

Wie bereits eingangs verfahrensgemäß erwähnt, ist durch ein zweites Zirkulationssystem mit einer Verbrennungswärmequelle und Heizelementen eine Heizungsuntersützung bei nicht ausreichender solarthermischer Einstrahlung möglich.

Wenn ein Heizelement im Wasserspeicher angeordnet ist, kann über die Verbrennungswärmequelle des zweiten Zirkulationssystems der Warmwasserspeicher auf die gewünschte Warmwassertemperatur aufgeladen werden. Insbesondere ist es so möglich, in regelmäßigen zeitlichen Abständen eine Wassertemperatur von 60 °C in dem Warmwasserspeicher zum Abtöten etwaiger Legionellen in energetisch effektiver Weise zu erreichen.

Um das erste Zirkulationssystem mit dem zweiten Zirkulationssystem zu verbinden, ist zwischen dem ersten Zirkulationssystem und dem zweiten Zirkulationssystem ein Wärmetauscher angeordnet. Überschüssige Wärmeenergie aus dem zweiten Zirkulationssystem kann somit effektiv auf das erste Zirkulationssystem und somit zur Unterstützung der Betonkernerwärmung genutzt werden.

Dadurch, dass Zuleitungen zum Wärmetauscher am ersten und zweiten Zirkulationssystem über 3-2-Wege-Ventile angeschlossen sind, kann der Wärmeaustausch zwischen dem ersten und zweiten Zirkulationssystem gezielt angesteuert werden.

Wenn Heizelemente Heizschlangen im Estrich und/oder in Wänden sind, werden als Heizelemente für das zweite Zirkulationssystem ebenfalls Flächenheizungen verwirklicht, die eine besonders angenehme Wärme mit hohem Wärmestrahlungsanteil liefern. Bevorzugt ist die Verbrennungswärmequelle ein Kaminofen, ein Holzpelletofen oder ein Gas- oder Ölbrenner.

Nachfolgend wird ein Ausführungsbeispiel der Erfindung anhand der beiliegenden Zeichnungen detailliert beschrieben.

### Darin zeigt:

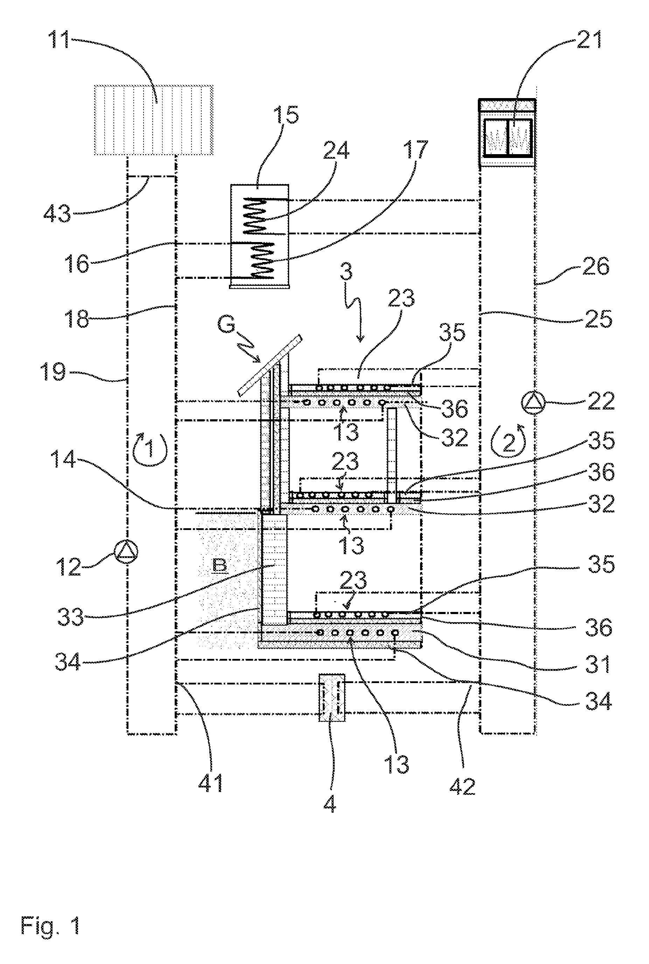

- Fig. 1: eine Installationsskizze einer erfindungsgemäßen solartechnischen Anordnung

In Fig. 1 ist schematisch ein Gebäude G in einer angeschnittenen Schnittdarstellung abgebildet. Dazu sind ferner die Elemente der solartechnischen Anordnung mit ihrer Installation dargestellt.

Das Gebäude G weist eine Vielzahl von massiven Bauelementen 3 auf. Im Boden B ist eine Fundamentplatte 31 in Form einer massiven Betonplatte auf einer entsprechend geeigneten Wärmedämmung 34 angeordnet. Auf der Fundamentplatte 31 ist eine Stein- oder Betonwand 33, ebenfalls mittels Wärmedämmung 34 zum außen umgebenden Boden B wärmegedämmt, angeordnet. Auf der durch die Stein- oder Betonwand 33 gebildeten Kellerwand ist eine Rohdecke 32 aufgelegt. Darauf ist wiederum eine Stein- oder Betonwand 33 mit äußerer Wärmedämmung 34 aufgestellt, auf der im hier dargestellten Ausführungsbeispiel eine weitere Rohdecke 32 für das Obergeschoss angeordnet ist.

Die Fundamentplatte 31 sowie die Rohdecken 32, 32 weisen in ihrer Betonmasse eingegossene Wärmeabgabemittel 13 in Form von Leitungsschlangen großer Länge auf. Auf der Fundamentplatte 31 bzw. den Rohdecken 32 ist in der üblichen Weise ein auf einer Dämmung 36 aufgebrachter Estrich 35 angeordnet. Im Estrich 35 sind Heizelemente 23 in Form einer üblichen Fußbodenheizung vorgesehen.

In Fig. 1 ist linksseitig ein erstes Zirkulationssystem 1 und rechtsseitig ein zweites Zirkulationssystem 2, jeweils mit seiner Zirkulationsrichtung entsprechend Pfeildarstellung wiedergegeben.

Das erste Zirkulationssystem 1 weist einen Solarkollektor zum Erwärmen des im ersten Zirkulationssystem 1 zu zirkulierenden Wärmeträgermediums auf. Vom Solarkollektor führt eine Vorlaufleitung 18 zu verschiedenen Wärmeabgabemitteln 13, 17.

Das im Solarkollektor 11 von der einstrahlenden Sonnenenergie erwärmte Wärmeträgermedium wird über den Vorlauf 18 zunächst zu einem 3-2-WegeVentil 16 oder einem Mischventil geführt, von dem das Wärmeträgermedium bedarfsweise, ggf. auch in einem Teilstrom, über ein erstes Wasserspeicherheizelement 17 im unteren Teil eines Wasserspeichers 15 zur unmittelbaren Erwärmung von Brauchwasser geführt wird. Weiter wird das erwärmte Wärmeträgermedium zu den weiteren Wärmeabgabemitteln in Form von Leitungsschlangen 13 in massiven Bauelementen 3, nämlich der Rohdecke 32 des Obergeschosses, der Rohdecke 32 des Erdgeschosses und der Fundamentplatte 31 des Kellers im Gebäude G geführt. In den Zuläufen für die jeweiligen Leitungsschlangen 13 sind bevorzugt ebenfalls 3-2-Wege-Ventile 16 oder Mischventile 14 angeordnet, die hier der Übersichtlichkeit halber nicht an jeder Position dargestellt sind. Ferner ist im ersten Zirkulationssystem 1 eine Pumpe 12 zum Zirkulieren des Wärmeträgermediums vorgesehen. Ferner können bei Verwendung von Mischventilen auch Pumpen in von dem jeweiligen Mischventil abzweigenden Unterkreislauf vorgesehen sein.

Das zweite Zirkulationssystem 2 weist eine Verbrennungswärmequelle 21 hier in Form eines Kaminofens auf. Von der Verbrennungswärmequelle 21 führt ein Vorlauf 25 zu einzelnen Verbrauchern der in der Verbrennungswärmequelle 21 erzeugten Wärmeenergie. Ferner ist im zweiten Zirkulationssystem 2 eine Pumpe 22 zum Zirkulieren des Wärmeträgermediums vorgesehen. Ein Rücklauf 26 führt das Wärmeträgermedium zurück in einen nicht weiter dargestellten Wärmetauscher in der Verbrennungswärmequelle 21, beispielsweise den Kaminofen.

Am zweiten Zirkulationssystem 2 sind ähnlich zum ersten Zirkulationssystem 1 über bevorzugt 3-2-Wege-Ventile oder Mischventile optional anzusprechende Heizelemente 23 vorgesehen. In Strömungsrichtung des Wärmeträgermediums im zweiten Zirkulationssystem 2 wird im Vorlauf 25 zunächst optional ein zweites Wasserspeicherheizelement 24 mit Wärme beaufschlagt. Somit wird bedarfsweise das Brauchwasser im Wasserspeicher 15 neben der Erwärmung durch das erste Zirkulationssystem 1, also der solarerzeugten Erwärmung erwärmt. Dies kann beispielsweise zur periodischen Erwärmung des Brauchwassers über auf eine Temperartur bis 60 °C zum Abtöten der gesundheitlich bedenklichen Legionellen dienen. Darüber hinaus kann bei schwacher Solareinstrahlung die für den Benutzungskomfort erforderliche Warmwassertemperatur in dem Wasserspeicher 15 durch das Zuheizen über das zweite Zirkulationssystem 2 erreicht werden.

Weiter stromabwärts im Vorlauf 25 ist ein Heizelement 23 in Form einer im Estrich 35 angeordneten Fußbodenheizung auf der oberen Geschossdecke sowie nachfolgend auf der Erdgeschossdecke angeordnet. Danach folgt stromabwärtig ein Zirkulationszweig über ein ebenfalls als Fußbodenheizung ausgebildetes Heizelement 23 im Estrich 35 auf der Fundamentplatte 31.

Stromabwärtig dieser Heizelemente ist ein Zirkulationsabschnitt vorgesehen, der ebenfalls bedarfsweise über ein 3-2-Wege-Ventil 42 zu einem Wärmetauscher 4 führt, wobei an der anderen Seite des Wärmetauschers 4 das erste Zirkulationssystem 1, bedarfsweise über ein 3-2-Wege-Ventil 41 ankoppelbar ist. Der Wärmetauscher 4 ermöglicht somit einen Wärmeübergang von dem ersten auf das zweite Zirkulationssystem oder vom zweiten Zirkulationssystem 2 auf das erste Zirkulationssystem 1. Bei starker Solareinstrahlung kann somit zusätzlich solarerzeugte Wärme an das zweite Zirkulationssystem 2 abgegeben und direkt zur Fußbodenerwärmung über die Heizelemente 23 im Estrich 35 des Gebäudes G verwendet werden.

Bei geringer Solareinstrahlung kann das zweite Zirkulationssystem 2 in der Verbrennungswärmequelle 21 erzeugte überschüssige Wärme über den Wärmetauscher 4 an das erste Zirkulationssystem 1 abgeben und somit Wärme in die Betonmassen 3, nämlich Fundamentplatte 31 und Rohdecke 32 sowie ggf. Stein- oder Betonwand 33 abgeben. Im dargestellten Ausführungsbeispiel sind die Stein- oder Betonwände 33 nicht mit einer Leitungsschlange ausgerüstet. Dies kann jedoch in anderen Ausführungen durchaus sinnvoll sein. Bei einer Einkopplung von Wärme in das erste Zirkulationssystem 1 über den Wärmetauscher 4 wird bevorzugt der Solarkollektor 11 durch Kurzschluss über die Bypass-Leitung 43 von der Zirkulation ausgeschlossen, um eine Wärmeabgabe im Solarkollektor 11 an die Umgebung zu vermeiden.

Mit dem erfindungsgemäßen solartechnischen System kann von dem Solarkollektor aufgefangene Wärmeenergie in eine große Speichermasse des Gebäudes, nämlich massiven Bauelementen 3 abgegeben werden. Diese massiven Bauelemente, insbesondere Fundamentplatte 31, Rohdecken 32 und/oder Stein- oder Betonwände 33 sind zur äußeren Umgebung gut wärmegedämmt ausgebildet und geben über einen langen Zeitraum und phasenverschoben die in ihrer Masse eingebrachte Wärme langsam an die Innenräume des Gebäudes ab. Es wird somit eine besonders wohlige Wärme mit hohem Strahlungswärmeanteil erzeugt. Da das Temperaturniveau der zur Wärmespeicherung vorgesehenen massiven Bauelemente 3 stets deutlich niedriger sein wird, als die am Solarkollektor 11 anliegende solarerzeugte Wärme, kann die solare Wärme stets mit gutem Wirkungsgrad in die Betonmasse eingespeichert werden.

Sollte eine Zuheizung an besonders kalten Tagen mit geringer solarer Einstrahlung erforderlich sein, kann beispielsweise ein Kaminofen über ein zweites Zirkulationssystem als Verbrennungswärmequelle 21 dienen, der neben der unmittelbar erzeugten Strahlungs- und Heizwärme vom Kaminofen, der beispielsweise im Wohnzimmer aufgestellt ist, eine Zuheizung im gesamten Gebäude über die gesonderten Heizelemente 23 in Form von herkömmlichen Fußbodenheizungen liefert. Ferner kann über die ergänzende Verbrennungswärmequelle 21 das Brauchwasser im Wasserspeicher 15 mit den darin angeordneten zweiten Wasserspeicherheizelement 24 auf eine höhere Temperatur gebracht werden. Über den gesondert zwischem dem ersten Zirkulationssystem 1 und dem zweiten Zirkulationssystem 2 angeordneten Wärmetauscher 4 kann in der Verbrennungswärmequelle 21 erzeugte überschüssige Wärme an die massiven Bauelemente zur "Wärmespeicherung" abgegeben werden.

Die in den Betonmassen 3 eingebrachte Wärme wird ohne erneuten mittelbaren Wärmetransport über einen langen Zeitraum langsam an den Innenraum abgegeben.

### Bezugszeichenliste

- 1: erstes Zirkulationssystem
- 11: Solarkollektor
- 12: Pumpe
- 13: Wärmeabgabemittel, Leitungsschlange
- 14: Mischventil
- 15: Wasserspeicher
- 16: 3-2-Wege-Ventil
- 17: erstes Wasserspeicherheizelement
- 18: Vorlauf
- 19: Rücklauf
- 2: zweites Zirkulationssystem
- 21: Verbrennungswärmequelle
- 22: Pumpe
- 23: Heizelement
- 24: zweites Wasserspeicherheizelement
- 25: Vorlauf
- 26: Rücklauf
- 3: Massives Bauelement, Betonmasse
- 31: Fundamentplatte
- 32: Rohdecke
- 33: Stein- oder Betonwand
- 34: Wärmedämmung
- 35: Estrich
- 36: Dämmung
- 4: Wärmetauscher
- 41: 3-2-Wege-Ventil
- 42: 3-2-Wege-Ventil

- 43: Bypass-Leitung
- B: Boden
- G: Gebäude

## Patentansprüche

1. Verfahren zur Beheizung und/oder Kühlung von Gebäuden, die massive Bauelemente, insbesondere Betonmassen, wie beispielsweise Fundamente und Decken aufweisen, mittels Solarenergie, mit den Schritten:
- Erwärmen eines Wärmeträgermediums in einem Solarkollektor;
- Zirkulieren des Wärmeträgermediums über ein erstes Zirkulationssystem,
- Erwärmen der massiven Bauelemente durch das erste Zirkulationssystem und
- Wärmeabgabe von den massiven Bauelementen an Innenräume des Gebäudes.

2. Verfahren nach Anspruch 1, **dadurch gekennzeichnet, dass** das Wärmeträgermedium im ersten Zirkulationssystem vom Solarkollektor zunächst zu einem Warmwasserspeicher geführt wird.

3. Verfahren nach Anspruch 1 oder 2, **dadurch gekennzeichnet, dass** das Erwärmen der massiven Bauelemente von einer Verbrennungswärmequelle in einem zweiten Zirkulationssystem unterstützt wird.

4. Solartechnische Anordnung zur Beheizung und/oder Kühlung von Gebäuden, die massive Bauelemente (3) aufweisen, mittels Solarenergie, mit
- einem Solarkollektor (11),
- einem ersten Zirkulationssystem (1) für ein Wärmeträgermedium mit einer Pumpe (12) und wenigstens einem am ersten Zirkulationssystem (1) angeschlossenen Wärmeabgabemittel (13),
**dadurch gekennzeichnet, dass** das Wärmeabgabemittel (13) Leitungsschlangen sind, wobei die Leitungsschlangen (13) in den massiven Bauelementen (3) eingelegt sind.

5. Solartechnische Anordnung nach Anspruch 4, **dadurch gekennzeichnet, dass** die massiven Bauelemente (3) folgende Gebäudebestandteile sein können: Fundamentplatte (31), Rohdecke (32), Stein- oder Betonwand (33).

6. Solartechnische Anordnung nach Anspruch 4 oder 5, **dadurch gekennzeichnet, dass** die massiven Bauelemente (3) zur Außenumgebung wärmegedämmt ausgebildet sind.

7. Solartechnische Anordnung nach Anspruch 4, 5 oder 6, **dadurch gekennzeichnet, dass** im ersten Zirkulationssystem (1) zwischen Sonnenkollektor (11) und Leitungsschlange (13) ein Mischventil (14) angeordnet ist.

8. Solartechnische Anordnung nach Anspruch 4, 5, 6 oder 7, **dadurch gekennzeichnet, dass** ein Wasserspeicher (15) am ersten Zirkulationssystem (1), bevorzugt über ein 3-2-Wege-Ventil (16) oder ein Mischer angeschlossen ist.

9. Solartechnische Anordnung nach einem der Ansprüche 4 bis 8, **dadurch gekennzeichnet, dass** ein zweites Zirkulationssystem (2) vorgesehen ist mit einer Verbrennungswärmequelle (21) und Heizelementen (23, 24).

10. Solartechnische Anordnung nach Anspruch 9, **dadurch gekennzeichnet, dass** ein Heizelement als Wasserspeicherheizelement (24) im Wasserspeicher (15) angeordnet ist.

11. Solartechnische Anordnung nach Anspruch 9 oder 10, **dadurch gekennzeichnet, dass** zwischen dem ersten Zirkulationssystem (1) und dem zweiten Zirkulationssystem (2) ein Wärmetauscher (4) angeordnet ist.

12. Solartechnische Anordnung nach Anspruch 11, **dadurch gekennzeichnet, dass** Zuleitungen zum Wärmetauscher (4) am ersten und zweiten Zirkulationssystem (1, 2) über 3-2-Wege-Ventile (41, 42) angeschlossen sind.

13. Solartechnische Anordnung nach Anspruch 9, 10, 11 oder 12, **dadurch gekennzeichnet, dass** Heizelemente (23) Heizschlangen in Estrich und/oder in Wänden sind.

14. Solartechnische Anordnung nach Anspruch 9, 10, 11, 12 oder 13, **dadurch gekennzeichnet, dass** die Verbrennungswärmequelle (21) ein Kaminofen, ein Holzpelletofen oder ein Gas- oder Ölbrenner ist.
